# EUROPEAN PATENT APPLICATION

(11) **EP 4 501 514 A1**
(43) Date of publication of application: **05.02.2025**
(21) Application number: 23807222.7
(22) Date of filing: 18.01.2023
(51) Int. Cl.: B23K 11/11, B23K 11/24

(54) **METHOD FOR DETERMINING GAP AND DEVICE FOR DETERMINING GAP BETWEEN STEEL PLATES IN RESISTANCE SPOT WELDING**

(30) Priority: 19.05.2022 JP 2022082232
(71) Applicant: JFE Steel Corporation, Tokyo 100-0011 (JP)
(72) Inventor: TAJIKA, Hisakazu, Tokyo 100-0011 (JP); MUNEMURA, Naoaki, Tokyo 100-0011 (JP); TANIGUCHI, Koichi, Tokyo 100-0011 (JP)
(74) Representative: Haseltine Lake Kempner LLP
(86) International application number: PCT/JP2023/001377
(87) International publication number: WO 2023/223604

(57) **Abstract**

There are provided a method for determining a gap, and the like between steel sheets in resistance spot welding capable of determining the presence of a gap between overlapped steel sheets by directly measuring the shapes of the primary surfaces of the steel sheets in a state after the steel sheets are pressurized with a first electrode and a second electrode and before welding current is applied between the first electrode and the second electrode. The method for determining a gap between steel sheets includes: a distance measurement step (Step S1) of measuring, in a state after a plurality of overlapped steel sheets (SU), (SL) is pressurized and before welding current is applied between a first electrode (12) and a second electrode (13), the distances to a plurality of points (M1), (M2) on a primary surface (SLa) of an electrode-vicinity region (A) of the uppermost or lowermost steel sheet (SL) and the distances to a plurality of points (M3), (M4) on a primary surface (SLb) of a separation region (B) of the steel sheet (SL) with a range finder (35); and a determination step (Step S2) of determining whether a gap (δ) is present between the overlapped steel sheets (SU), (SL) based on the measured distances.

## Description

### Technical Field

The present invention relates to a method for determining a gap and a device for determining a gap between steel sheets in resistance spot welding.

### Background Art

In general, a resistance spot welding method, which is a type of lap resistance welding, is used to join overlapped steel sheets.

The resistance spot welding method is a method in which a plurality of overlapped steel sheets is sandwiched between a pair of electrodes and pressurized from above and below with the pair of electrodes and, under the pressurization, a high welding current is applied between the upper and lower electrodes for joining. Utilizing resistance heating generated by applying the high welding current, a dot-shaped welded part is obtained. The welded part is referred to as a nugget, and is a portion where, when current is applied to the overlapped steel sheets, the two steel sheets are melted and solidified at a contact point of the steel sheets, which joins the steel sheets in a dot shape.

In the resistance spot welding, ideally, the adhesion of the steel sheets is achieved using a straight sheet assembly (a plurality of steel sheets being overlapped with each other), and, when the angle (driving angle) formed between the electrodes and the sheet assembly is 90°, the welding quality is the best in the viewpoint of the positions of a welding machine and the sheet assembly as a welding target in welding running. However, the steel sheets inevitably vary in straightness, and thus the 90° angle, which is the angle (driving angle) formed between the electrodes and the sheet assembly, cannot be achieved. Further, when pressed steel sheets are welded, waviness inevitably occurs due to plastic machining or press machining, and the waviness becomes a disturbance. There is a plurality of types of disturbances, and a deviation in the relative angle between the electrodes and the sheet assembly poses a problem of causing uneven distribution in a molten metal during the resistance spot welding. There is also such a problem that, when the steel sheets are pressurized with the pair of electrodes, a cavity remains between the steel sheets due to the presence of a gap, and the cavity hinders the flow of current in welding running or causes destructive damage due to the spring action or the like of the steel sheets after welding. Further, when a gap is present between the steel sheets, there is a risk of causing strain in a welded part by distortion of the steel sheets in the vicinity of the electrodes after the overlapped steel sheets are welded.

Even when the influence of such disturbances is significant, the resistance spot welding method described in PTL 1, for example, is conventionally known as a method making it possible to secure a desired nugget diameter.

The resistance spot welding method described in PTL 1 includes performing main welding and test welding prior to the main welding, and performing the test welding under two or more welding conditions. Then, the test welding stores for each welding condition: a pressurizing force parameter from the start of pressurization of a material to be welded until the set pressurizing force is reached before the start of application of current; and a time change curve of the instantaneous heat generation amount per unit volume and the cumulative heat generation amount per unit volume that are calculated from the electrical characteristics between the electrodes when current is applied by constant current control to form an appropriate nugget. Further, in the main welding, the material to be welded is pressurized under the same conditions as those of the test welding before the start of application of current, and a pressurizing force parameter from the start of the pressurization until the set pressurizing force is reached and the pressurizing force parameter stored in the test welding are compared with each other for each welding condition of the test welding. Then, the time change curve of the instantaneous heat generation amount per unit volume and the cumulative heat generation amount per unit volume in the test welding stored under the welding condition having the smallest difference are set as target values in the main welding. Then, adaptive control welding in which the current application amount is controlled is performed according to the target values.

In the resistance spot welding technology, such as the resistance spot welding method described in PTL 1, conditions, such as disturbances and steel sheet grades, are important. Knowing these conditions in advance allows specifying the optimal upper welding limit.

Herein, the steel sheet grade is a clearly given condition, while the disturbances are assumed to be different for each work due to manufacturing errors and positional errors of the welding machine, for example.

As a method for evaluating the disturbances, particularly the driving angle among the disturbances, immediately before welding, the methods described in PTLs 2 and 3, for example, are conventionally known.

In the driving angle measurement method in resistance spot welding described in PTL 2, a welding target having a plurality of overlapped steel sheets is sandwiched between an upper electrode and a lower electrode in a state where a plurality of strain gauges is attached in the circumferential direction to the upper electrode of the upper electrode and the lower electrode arranged opposite to each other. Then, the driving angle direction, which is the slope of the axis line of the upper electrode to the normal line of a contact surface with the upper electrode in the welding target, and the magnitude of the driving angle are calculated from a plurality of strain measurement values measured with the plurality of strain gauges.

In the method for manufacturing a spot welded joint described in PTL 3, the magnitude of the driving angle of a first electrode is calculated based on a plurality of strain measurement values measured with a plurality of three or more first strain gauges attached to the first electrode at equal intervals in the circumferential direction. Further, the magnitude of the driving angle of a second electrode is calculated based on a plurality of strain measurement values measured with a plurality of three or more second strain gauges attached to the second electrode at equal intervals in the circumferential direction. Then, the angle of a welding gun is changed according to a ratio between a first strength index, which is a product of the tensile strength and the sheet thickness in a first steel sheet contacting the first electrode, to a second strength index, which is a product of the tensile strength and the sheet thickness in a second steel sheet contacting the second electrode.

### Citation List

### Patent Literatures

PTL 1: JP 6590121 B
PTL 2: JP 2021-109244 A
PTL 3: JP 2021-154364 A

### Summary of Invention

### Technical Problem

However, the driving angle measurement method in resistance spot welding described in PTL 2 and the method for manufacturing a spot welded joint described in PTL 3 have had the following problems.

More specifically, in both the driving angle measurement method in resistance spot welding described in PTL 2 and the method for manufacturing a spot welded joint described in PTL 3, the magnitude of the driving angle of the electrode is calculated based on the strain measurement values measured with the strain gauges attached to the electrode. In calculating the driving angle of the electrode, the strain measurement values measured with the strain gauges attached to the electrode are used without measuring the direct state of a steel sheet serving as the welding target. Therefore, there is a possibility that the load balance varies due to the wear of the electrode or the surface roughness state of the steel sheet, for example. In this case, the strain is measured in a state having noise, and therefore the driving angle of the electrode calculated based on the obtained strain measurement values is not reliable.

In particular, in both the driving angle measurement method in resistance spot welding described in PTL 2 and the method for manufacturing a spot welded joint described in PTL 3, the presence of a gap between the overlapped steel sheets among the disturbances is not determined by directly measuring the surface shapes of the overlapped steel sheets serving as the welding target. Therefore, the presence of a gap between the steel sheets poses a risk of causing strain in a welded part in the vicinity of the electrode by distortion of the steel sheets after the overlapped steel sheets are welded.

The present invention has been made to solve the conventional problem. It is an object of the present invention to provide a method for determining a gap and a device for determining a gap between steel sheets in resistance spot welding capable of determining the presence of a gap between a plurality of overlapped steel sheets among the disturbances by directly measuring the shapes of the primary surfaces of the overlapped steel sheets in a state after the plurality of overlapped steel sheets is pressurized with the first electrode and the second electrode and before welding current is applied between a first electrode and a second electrode.

### Solution to Problem

To achieve the above-described object, a method for determining a gap between steel sheets in resistance spot welding according to one aspect of the present invention, the resistance spot welding including pressurizing a plurality of overlapped steel sheets sandwiched between a first electrode and a second electrode arranged opposite to each other and, under the pressurization, applying welding current between the first electrode and the second electrode for joining, includes: a distance measurement step of measuring, with a range finder, the distances from the range finder to a plurality of points on the primary surface of an electrode-vicinity region of the uppermost or lowermost steel sheet of the plurality of overlapped steel sheets and the distances from the range finder to a plurality of points on the primary surface of a separation region separated from the electrode-vicinity region of the uppermost or lowermost steel sheet in a state after the plurality of overlapped steel sheets is pressurized with the first electrode and the second electrode and before the welding current is applied between the first electrode and the second electrode; and a determination step of determining whether a gap is present between the plurality of overlapped steel sheets based on the distances to the plurality of points on the primary surface of the electrode-vicinity region of the steel sheet and the distances to the plurality of points on the primary surface of the separation region of the steel sheet measured in the distance measurement step, in which the determination step includes: a regression line calculation step of calculating a first regression line regressing the slope of the primary surface of the electrode-vicinity region of the steel sheet based on the distances to the plurality of points on the primary surface of the electrode-vicinity region of the steel sheet measured in the distance measurement step and calculating a second regression line regressing the slope of the primary surface of the separation region of the steel sheet based on the distances to the plurality of points on the primary surface of the separation region of the steel sheet measured in the distance measurement step; and a gap determination step of determining whether a gap is present between the plurality of overlapped steel sheets based on the angle formed between the first regression line and the second regression line calculated in the regression line calculation step.

A device for determining a gap between steel sheets in resistance spot welding according to another aspect of the present invention, the resistance spot welding including pressurizing a plurality of overlapped steel sheets sandwiched between a first electrode and a second electrode arranged opposite to each other and, under the pressurization, applying welding current between the first electrode and the second electrode for joining, includes: a range finder configured to measure the distances to a plurality of points on the primary surface of an electrode-vicinity region of the uppermost or lowermost steel sheet of the plurality of overlapped steel sheets and the distances to a plurality of points on the primary surface of a separation region separated from the electrode-vicinity region of the uppermost or lowermost steel sheet in a state after the plurality of overlapped steel sheets is pressurized with the first electrode and the second electrode and before the welding current is applied between the first electrode and the second electrode; and a determination device configured to determine whether a gap is present between the plurality of overlapped steel sheets based on the distances to the plurality of points on the primary surface of the electrode-vicinity region of the steel sheet and the distances to the plurality of points on the primary surface of the separation region of the steel sheet measured with the range finder, in which the determination devices includes: a regression line calculation section configured to calculate a first regression line regressing the slope of the primary surface of the electrode-vicinity region of the steel sheet based on the distances to the plurality of points on the primary surface of the electrode-vicinity region of the steel sheet measured with the range finder and calculate a second regression line regressing the slope of the primary surface of the separation region of the steel sheet based on the distances to the plurality of points on the primary surface of the separation region of the steel sheet measured with the range finder; and a gap determination section configured to determine whether a gap is present between the plurality of overlapped steel sheets based on the angle formed between the first regression line and the second regression line calculated with the regression line calculation section.

### Advantageous Effects of Invention

The method for determining a gap and the device for determining a gap between steel sheets in resistance spot welding according to the present invention can provide a method for determining a gap and a device for determining a gap between steel sheets in resistance spot welding capable of determining the presence of a gap between a plurality of overlapped steel sheets among the disturbances by directly measuring the shapes of the primary surfaces of the overlapped steel sheets in a state after the plurality of overlapped steel sheets is pressurized with a first electrode and a second electrode and before the welding current is applied between the first electrode and the second electrode.

### Brief Description of Drawings

FIG. 1 is a right side view of the schematic configuration of a resistance spot welding device including a gap determination device according to one embodiment of the present invention, and FIG. 1 illustrates a state where a gap is present between overlapped upper steel sheet and lower steel sheet and the upper steel sheet and the lower steel sheet are sandwiched between a first electrode and a second electrode in this state and a state before pressurization with the first electrode and the second electrode is started;
FIG. 2 is a front view of a welding gun constituting the resistance spot welding device in the state illustrated in FIG. 1;
FIG. 3 is an enlarged view of portions of the electrodes and the upper steel sheet and the lower steel sheet in the welding gun in the state illustrated in FIG. 2;
FIG. 4 is a right side view of the welding gun in a state after the pressurization with the first electrode and the second electrode is started from the state illustrated in FIG. 1;
FIG. 5 is a front view of the welding gun in the state illustrated in FIG. 4;
FIG. 6 is an enlarged view of the portions of the electrodes and the upper steel sheet and the lower steel sheet in the welding gun in the state illustrated in FIG. 5;
FIG. 7 is a graph showing the shape of the primary surface (front surface) of the upper steel sheet after welding, which is a test result of a welding test of applying resistance spot welding to a test specimen having a 2 mm gap between the overlapped upper steel sheet and lower steel sheet;
FIG. 8 is a graph showing the shape of the primary surface (front surface) of the upper steel sheet after welding, which is a test result of a welding test of applying resistance spot welding to a test specimen having no gaps between the overlapped upper steel sheet and lower steel sheet;
FIG. 9 is a flowchart for explaining the processing flow in the gap determination device;
FIG. 10 is a flowchart for explaining the processing flow of Step S2 (determination step) in the flowchart illustrated in FIG. 9;
FIG. 11 is a view for explaining the principle of the gap determination with the gap determination device;
FIG. 12 is a view illustrating the ground for setting the threshold value of the angle on the acute angle side formed between a first regression line and a second regression line to 0.5° when the resistance spot welding is applied to the test specimen having a 2 mm gap between the overlapped upper steel sheet and lower steel sheet;
FIG. 13 is a view for explaining another example of the principle of the gap determination with the gap determination device;
FIG. 14 is a view for explaining a first modification of the gap determination device and illustrates the right side surface of the welding gun in a state after the pressurization with the first electrode and the second electrode is started;
FIG. 15 is a front view of the welding gun in the state illustrated in FIG. 14;
FIG. 16 is a view for explaining a second modification of the gap determination device and illustrates the right side surface of the welding gun in a state after the pressurization with the first electrode and the second electrode is started;
FIG. 17 is a front view of the welding gun in the state illustrated in FIG. 16;
FIG. 18 is a view for explaining a third modification of the gap determination device and illustrates the right side surface of the welding gun in a state after the pressurization with the first electrode and the second electrode is started; and
FIG. 19 is a front view of the welding gun in the state illustrated in FIG. 18.

### Description of Embodiments

Hereinafter, embodiments of the present invention are described with reference to the drawings. Herein, the drawings are schematic. Therefore, it should be noted that the relationship between the thickness and the planar dimension, ratio, and the like are different from the actual relationship, ratio, and the like. The drawings also include portions different in mutual dimensional relationships and ratios.

The embodiments described below exemplify devices or methods for embodying the technical idea of the present invention, and the technical idea of the present invention does not specify the materials, shapes, structures, arrangement, and the like of constituent components to the materials, shapes, structures, arrangement, and the like of the embodiments described below.

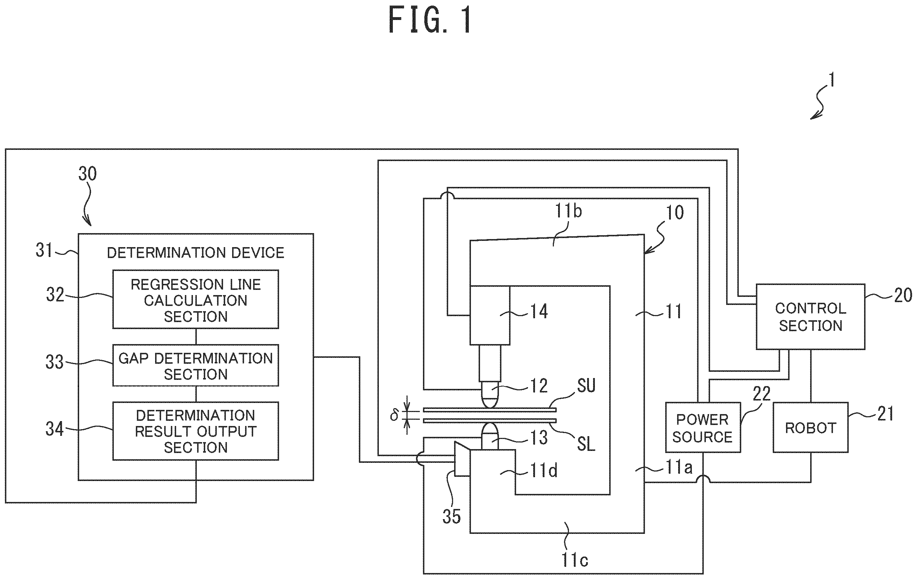

FIG. 1 illustrates the schematic configuration of a resistance spot welding device including a gap determination device according to one embodiment of the present invention.

A resistance spot welding device 1 illustrated in FIG. 1 is a device in which a plurality of overlapped steel sheets (in the example illustrated in FIG. 1, overlapped two steel sheets of an upper steel sheet SU and a lower steel sheet SL are illustrated) is sandwiched between a first electrode 12 and a second electrode 13 arranged opposite to each other and pressurized and, under the pressurization, welding current is applied between the first electrode 12 and the second electrode 13 for joining.

The number of the plurality of steel sheets joined with the resistance spot welding device 1 is not limited to the two steel sheets and may be three steel sheets, for example.

The resistance spot welding device 1 includes a welding gun 10, a robot 21, a power source 22, and a control section 20.

The welding gun 10 includes a welding gun body 11, and the first electrode 12 and the second electrode 13 attached to the welding gun body 11 and arranged opposite to each other.

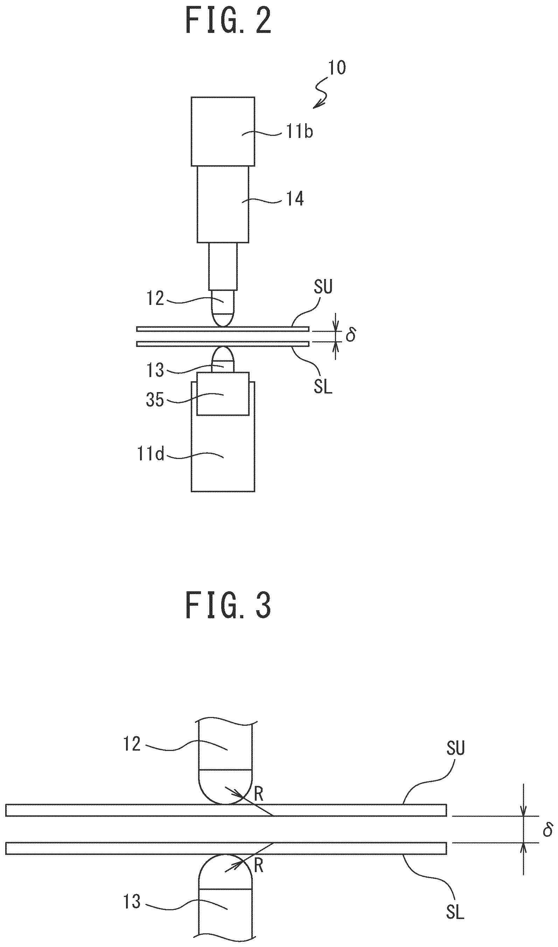

The welding gun body 11 is a C-shaped gun having a C-shape as viewed from the side as illustrated in FIG. 1. The welding gun body 11 includes an up-and-down elongation part 11a elongating in the up and down direction, an upper part 11b elongating from the upper end of the up-and-down elongation part 11a to the front side (left side in FIG. 1, frontward side in FIG. 2), a lower part 11c elongating from the lower end of the up-and-down elongation part 11a to the front side, and a raised part 11d elongating upward from the front end of the lower part 11c.

The first electrode 12 is attached to the undersurface of a front end part of the upper part 11b of the welding gun body 11 via an actuator 14. The actuator 14 is, for example, an electric linear motion actuator, a hydraulic linear motion actuator, or a pneumatic linear motion actuator, and moves the first electrode 12 in a direction toward or separated from the second electrode 13.

The second electrode 13 is attached opposite to the first electrode 12 on the raised part 11d surface of the welding gun body 11.

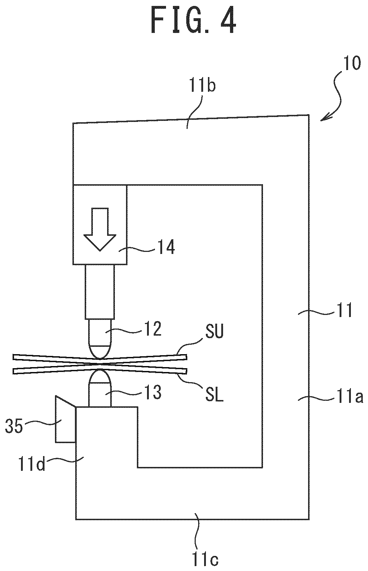

As illustrated in FIGS. 1 to 3, the first electrode 12 is arranged on the upper steel sheet SU and the second electrode 13 is arranged under the lower steel sheet SL. In this state, when the actuator moves the first electrode 12 closer to the second electrode 13 as illustrated in FIGS. 4 to 6, the upper steel sheet SU and the lower steel sheet SL are sandwiched between the first electrode 12 and the second electrode 13, and then pressurization to the upper steel sheet SU and the lower steel sheet SL is started.

The robot 21 contains a 6-axis vertical multi-joint robot, for example, and operates to move the welding gun body 11 in the horizontal direction (front and back direction and right and left direction) and the vertical direction (up and down direction) and to rotate the welding gun body 11 around an optional rotation axis. The robot 21 operates as described above, so that the position and the angle of the welding gun body 11 are changed.

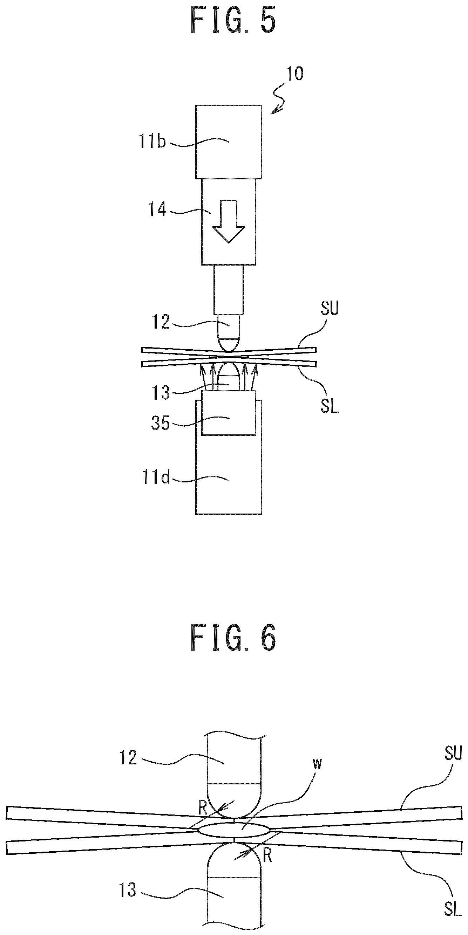

The power source 22 is electrically connected to the first electrode 12 and the second electrode 13. The upper steel sheet SU and the lower steel sheet SL are sandwiched between the first electrode 12 and the second electrode 13, and the upper steel sheet SU and the lower steel sheet SL are pressurized with the first electrode 12 and the second electrode 13. In this state, when current is applied between the first electrode 12 and the second electrode 13 with the power source 22, a nugget (molten part) is formed in a joint part between the upper steel sheet SU and the lower steel sheet SL due to Joule heat generated by contact resistance and resistance of the steel sheets. When the nugget is cooled and solidified, the joint part between the upper steel sheet SU and the lower steel sheet SL is welded and joined to form a welded part w (see FIG. 6).

The control section 20 is connected to the actuator 14, the robot 21, and the power source 22 to control the actuator 14, the robot 21, and the power source 22. The control section 20 controls welding conditions, such as pressurizing force with the first electrode 12 and the second electrode 13, the welding current, current application time, and a welding position, when the upper steel sheet SU and the lower steel sheet SL are welded.

Herein, as illustrated in FIGS. 1 to 3, a gap δ is present between the overlapped upper steel sheet SU and lower steel sheet SL. In this state, the upper steel sheet SU and the lower steel sheet SL are sandwiched between the first electrode 12 and the second electrode 13 arranged opposite to each other and pressurized as illustrated in FIGS. 4 to 6, and, under the pressurization, the welding current is applied between the first electrode 12 and the second electrode 13 for joining. This gives rise to the following problem.

More specifically, due to the presence of the gap δ between the upper steel sheet SU and the lower steel sheet SL, there is a risk of causing strain in the welded part w by distortion of the upper steel sheet SU and the lower steel sheet SL in the vicinity of the first electrode 12 and the second electrode 13 after the overlapped upper steel sheet SU and lower steel sheet SL are welded.

To avoid this problem, the resistance spot welding device 1 includes a gap determination device 30 as illustrated in FIG. 1. The gap determination device 30 determines, when the overlapped upper steel sheet SU and lower steel sheet SL are welded, whether the gap δ is present between the overlapped upper steel sheet SU and lower steel sheet SL in a state after the overlapped upper steel sheet SU and lower steel sheet SL are pressurized with the first electrode 12 and the second electrode 13 and before the welding current is applied between the first electrode 12 and the second electrode 13.

Prior to the determination of the presence of the gap δ between the upper steel sheet SU and the lower steel sheet SL with the gap determination device **30,** the present inventors have evaluated whether there is any difference in the deformation of the steel sheets SU, SL in the vicinity of the first electrode 12 and the second electrode 13 depending on the presence or absence of the gap δ between the upper steel sheet SU and the lower steel sheet SL.

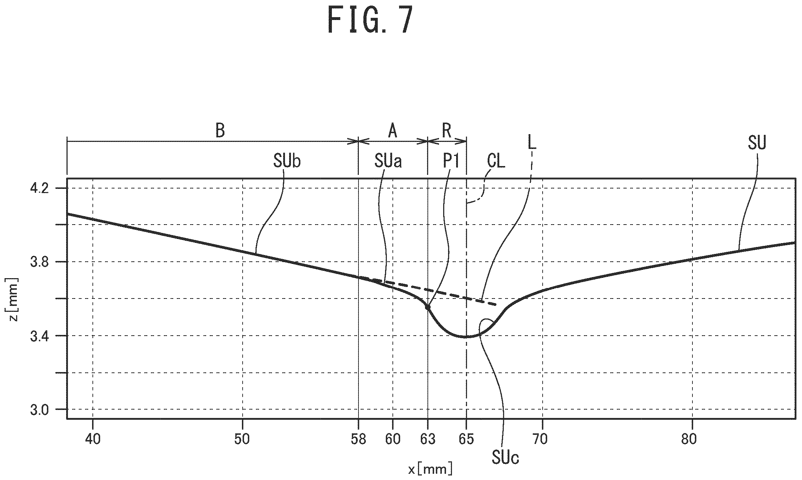

FIG. 7 illustrates a graph showing the shape of the primary surface (front surface) of the upper steel sheet SU after welding, which is a test result of a welding test in which resistance spot welding is applied to a test specimen having the 2 mm gap δ between the overlapped upper steel sheet SU and lower steel sheet SL. In FIG. 7, the horizontal axis indicates the position in the longitudinal direction (x-direction) of the upper steel sheet SU, and the vertical axis indicates the position in the up and down direction (z-direction) of the upper steel sheet SU.

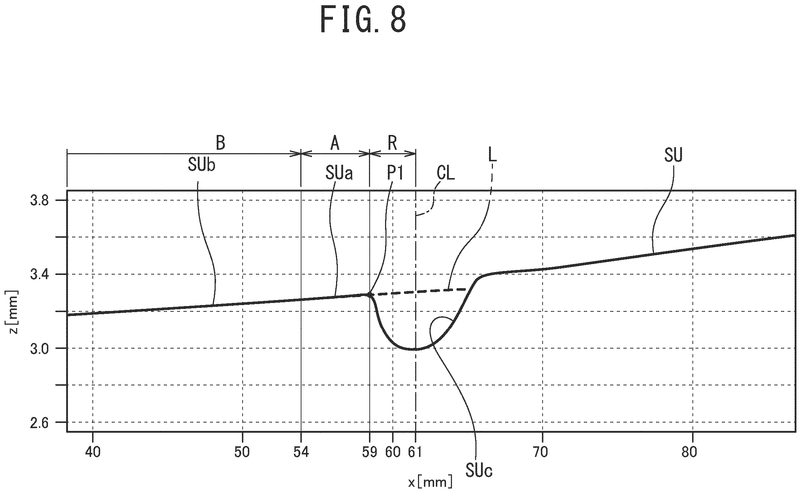

FIG. 8 illustrates a graph showing the shape of the primary surface (front surface) of the upper steel sheet SU after welding, which is a test result of a welding test in which the resistance spot welding is applied to a test specimen having no gap δ between the overlapped upper steel sheet SU and lower steel sheet SL. In FIG. 8, the horizontal axis indicates the position in the longitudinal direction (x-direction) of the upper steel sheet SU, and the vertical axis indicates the position in the up and down direction (z-direction) of the upper steel sheet SU.

The upper steel sheet SU and the lower steel sheet SL used in the welding test are 1470 MPa grade cold-rolled steel sheets having a sheet thickness of 1.6 mm.

Referring to FIGS. 7 and 8, it is found that the primary surface (front surface) of the upper steel sheet SU after welding has a concave SUc formed to be recessed by about 0.2 to 0.3 mm from the primary surface (front surface) regardless of the presence or absence of the gap δ between the upper steel sheet SU and the lower steel sheet SL in a region (x = 65 mm to 63 mm) corresponding to a radius R of the electrode (see FIGS. 3 and 6) from a center CL at the tip of the electrode (first electrode 12). The concave SUc is formed by the pressurization with the electrode (first electrode 12).

Referring to FIGS. 7 and 8, it is found that the primary surface (front surface) of the upper steel sheet SU after welding has a linear shape regardless of the presence or absence of the gap δ between the upper steel sheet SU and the lower steel sheet SL in a separation region B formed in a range up to 30 mm from a position beyond an electrode-vicinity region A formed in a range up to 5 mm from a position P1, where the primary surface of the upper steel sheet SU is visually recognizable, separated from the position of the center CL of the electrode (first electrode 12) corresponding to the radius R at the tip of the electrode (FIG. 7 illustrates only the range up to 19 mm and FIG. 8 illustrates only the range up to 15 mm). This is because the primary surface (front surface) of the separation region B of the upper steel sheet SU is free from the strain caused by pressurizing force of the first electrode 12 and the second electrode 13. More specifically, the primary surface (front surface) of the separation region B of the upper steel sheet SU has no places fixed in welding, and a place far from the welded part serves as an open end, and thus it is considered that no strain occurs.

Referring to FIG. 7, when the gap δ between the upper steel sheet SU and the lower steel sheet SL is 2 mm, the primary surface (front surface) of the upper steel sheet SU after welding is forcibly deformed to consume the gap δ, and thus the strain remains in the electrode-vicinity region A formed in the range up to 5 mm (x = 58 mm) from the position P1 (x = 63 mm), where the primary surface of the upper steel sheet SU is visually recognizable, separated from the position of the center CL of the electrode (first electrode 12) corresponding to the radius R at the tip of the electrode. Therefore, a primary surface (front surface) SUa of the electrode-vicinity region A deviates from a regression line L regressed on a primary surface (front surface) SUb of the separation region B.

Referring to FIG. 8, it is found that, when there is no gap δ between the upper steel sheet SU and the lower steel sheet SL, the primary surface (front surface) of the upper steel sheet SU after welding has a linear shape also in the electrode-vicinity region A formed in the range up to 5 mm (x = 54 mm) from the position P1 (x = 59 mm), where the primary surface of the upper steel sheet SU is visually recognizable, separated from the position of the center CL of the electrode (first electrode 12) corresponding to the radius R at the tip of the electrode, and the primary surface (front surface) SUa of the electrode-vicinity region A is not separated from the regression line L regressed on the primary surface (front surface) SUb of the separation region B.

In FIGS. 7 and 8, the electrode-vicinity region A and the separation region B are formed only on one side (in FIG. 7, side where the positions in the x-direction are smaller than the position of the CL of 65 mm) in the longitudinal direction (x-direction) with respect to the position of the center CL of the electrode, but are formed over the entire circumferential direction as viewed in plan with respect to the position of the center CL of the electrode.

The test results of the welding test illustrated in FIGS. 7 and 8 show that the presence or absence of strain on the primary surface (front surface) of the upper steel sheet SU after welding is observed, and similar results are obtained for the presence or absence of strain on the primary surface (rear surface) of the lower steel sheet SL after welding.

Therefore, the present inventors have found that, to determine the presence or absence of the gap δ between the upper steel sheet SU and the lower steel sheet SL, it is the best to determine whether the gap δ is present between the overlapped upper steel sheet SU and lower steel sheet SL based on the angle formed between a first regression line and a second regression line. The first regression line is the line regressing the slope of the primary surface (front surface) of the electrode-vicinity region A of the upper steel sheet SU or the slope of the primary surface (rear surface) of the electrode-vicinity region A of the lower steel sheet SL. The second regression line is the line regressing the slope of the primary surface (front surface) of the separation region B of the upper steel sheet SU or the slope of the primary surface (rear surface) of the separation region B of the lower steel sheet SL.

Accordingly, as illustrated in FIGS. 1 to 6 and 11, the gap determination device 30 according to this embodiment determines whether the gap δ is present between the overlapped upper steel sheet SU and lower steel sheet SL based on the angle θ formed between a first regression line L1 regressing the slope of the primary surface (rear surface) SLa of the electrode-vicinity region A of the lower steel sheet SL and a second regression line L2 regressing the slope of the primary surface (rear surface) SLb of the separation region B of the lower steel sheet SL.

As illustrated in FIG. 1, the gap determination device 30 includes a range finder 35 and a determination device 31.

The range finder 35 contains a laser range finder, is attached to the vicinity of the upper end of the front surface (left side surface in FIG. 1) of the raised part 11d of the welding gun body 11, and is electrically connected to the control section 20 and the determination device 30.

As illustrated in FIGS. 4, 5, and 11, the range finder 35 measures the distances from the range finder 35 to a plurality of points (two points M1, M2 in this embodiment) on the primary surface (rear surface) SLa of the electrode-vicinity region A of the lower steel sheet SL and the distances from the range finder 35 to a plurality of points (two points M3, M4 in this embodiment) on the primary surface (rear surface) SLb of the separation region B separated from the electrode-vicinity region A of the lower steel sheet SL in the state after the overlapped upper steel sheet SU and lower steel sheet SL are pressurized with the first electrode 12 and the second electrode 13 and before the welding current is applied between the first electrode 12 and the second electrode 13. The upper steel sheet SU and the lower steel sheet SL are overlapped with each other. The range finder 35 receives a signal indicating that the overlapped upper steel sheet SU and lower steel sheet SL are pressurized with the first electrode 12 and the second electrode 13 from the control section 20, starts the measurement using this signal as a trigger, and sends the measured information to the determination device 30.

Herein, the electrode-vicinity region A is described. In the above-described welding test, when the upper steel sheet SU and the lower steel sheet SL are the 1470 MPa grade cold-rolled steel sheets having a sheet thickness of 1.6 mm, the electrode-vicinity region A is formed in the range up to 5 mm from the position P1, where the primary surface of the upper steel sheet SU is visually recognizable, separated from a position CP of the center CL of the electrode corresponding to the radius R at the tip of the electrode. Therefore, also in this embodiment, when the upper steel sheet SU and the lower steel sheet SL are the 1470 MPa grade cold-rolled steel sheets having a sheet thickness of 1.6 mm, the electrode-vicinity region A is formed in the range up to 5 mm from the position P1, where the primary surface of the lower steel sheet SL is visually recognizable, separated from the position of the center CL of the second electrode 13 corresponding to the radius R at the tip of the second electrode 13. However, there is a possibility that, when the sheet thickness increases, when the steel grade is changed, or when the steel sheet has ribs or embossings in pressing, the bending rigidity increases, or when there is temporarily a disturbance, the area, where a gap is present, expands due to the pressurization in the vicinity of the electrode. Therefore, in this case, the position up to 5 mm from the position P1 where the primary surface of the lower steel sheet SL is visually recognizable is not the boundary position on the separation region B side of the electrode-vicinity region A. Accordingly, the position of the boundary on the separation region B side of the electrode-vicinity region A is required to be set as appropriate according to the shapes, the sheet thicknesses, and the steel grades of the upper steel sheet SU and the lower steel sheet SL. When the position of the boundary on the separation region B side of the electrode-vicinity region A is set, the boundary position can be set in advance by analysis from a calculation result obtained by calculating the mechanical strength, such as bending rigidity, according to the shapes, the sheet thicknesses, and the steel grades of the upper steel sheet SU and the lower steel sheet SL.

When the upper steel sheet SU and the lower steel sheet SL are the 1470 MPa grade cold-rolled steel sheets having a sheet thickness of 1.6 mm, the separation region B is formed in a range up to 30 mm from the position beyond the range up to 5 mm from the position P1 where the primary surface, in which the electrode-vicinity region A of the lower steel sheet SL is formed, of the lower steel sheet SL is visually recognizable. However, when the position of the boundary on the separation region B side of the electrode-vicinity region A is set as appropriate according to the shapes, the sheet thicknesses, and the steel grades of the upper steel sheet SU and the lower steel sheet SL, the separation region B is formed as follows. More specifically, the separation region B is formed in the range up to the position set as appropriate according to the shapes, the sheet thicknesses, and the steel grades of the upper steel sheet SU and the lower steel sheet SL from the position beyond the range up to the boundary position of the electrode-vicinity region A set as appropriate from the position P1 where the primary surface of the lower steel sheet SL is visually recognizable.

As illustrated in FIG. 1, the range finder 35 is attached to the front surface of the raised part 11d located at the front end of the lower part 11c of the welding gun body 11 and is not attached to the upper part 11b side of the welding gun body 11 where the movable first electrode 12 is attached. Therefore, the range finder 25 has the advantage of being hardly affected by vibrations immediately after the pressurization with the first electrode 12.

The determination device 31 determines whether the gap δ is present between the overlapped upper steel sheet SU and lower steel sheet SL based on the distances to the plurality of points M1, M2 on the primary surface (rear surface) SLa of the electrode-vicinity region A of the lower steel sheet SL and the distances to the plurality of points M3, M4 on the primary surface (rear surface) SLb of the separation region B of the lower steel sheet SL measured with the range finder 35.

Therefore, the determination device 31 includes a regression line calculation section 32, a gap determination section 33, and a determination result output section 34 as illustrated in FIG. 1. The determination device 31 is a computer system having an arithmetic processing function, is configured to include a ROM, a RAM, a CPU, and the like, and executes the functions of the regression line calculation section 32 (Step S21 described later), the gap determination section 33 (Step S22), and the determination result output section 34 (Step S23) on software in response to instructions of various dedicated programs pre-stored in the ROM and the like.

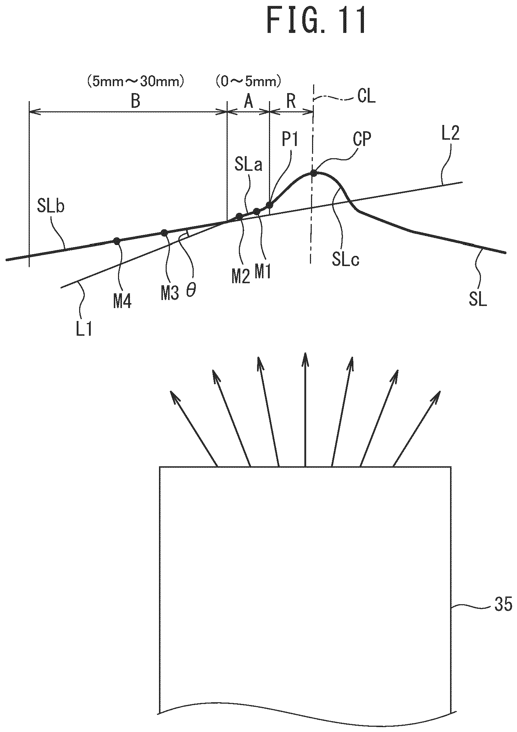

As illustrated in FIG. 11, the regression line calculation section 32 calculates the first regression line L1 regressing the slope of the primary surface SLa of the electrode-vicinity region A of the lower steel sheet SL based on the distances to the plurality of points M1, M2 on the primary surface (rear surface) of the electrode-vicinity region A of the lower steel sheet SL measured with the range finder 35. The regression line calculation section 32 calculates the second regression line L2 regressing the slope of the primary surface SLb of the separation region B of the lower steel sheet SL based on the distances to the plurality of points M3, M4 on the primary surface of the separation region B of the lower steel sheet SL measured with the range finder 35.

Specifically, the regression line calculation section 32 calculates the positions of the plurality of points M1, M2 based on the distances to the plurality of points M1, M2 on the primary surface SLa of the electrode-vicinity region A of the lower steel sheet SL measured with the range finder 35. Then, the regression line calculation section 32 calculates the first regression line L1 from the calculated positions of the plurality of points M1, M2.

The regression line calculation section 32 calculates the positions of the plurality of points M3, M4 based on the distances to the plurality of points M3, M4 on the primary surface SLb of the separation region B of the lower steel sheet SL measured with the range finder 35. Then, the regression line calculation section 32 calculates the second regression line L2 from the calculated positions of the plurality of points M3, M4.

The gap determination section 33 determines whether the gap δ is present between the overlapped upper steel sheet SU and lower steel sheet SL based on the angle θ formed between the first regression line L1 and the second regression line L2 calculated with the regression line calculation section 32.

Specifically, as illustrated in FIG. 11, the gap determination section 33 determines that the gap δ is present between the overlapped upper steel sheet SU and lower steel sheet SL when the angle θ on the acute angle side formed between the first regression line L1 and the second regression line L2 is equal to or larger than a predetermined angle.

On the other hand, the gap determination section 33 determines that no gap δ is present between the overlapped upper steel sheet SU and lower steel sheet SL when the angle θ on the acute angle side formed between the first regression line L1 and the second regression line L2 is smaller than the predetermined angle.

Herein, the predetermined angle for the gap determination serving as the threshold value is set to 0.5° in the case of this embodiment, i.e., when the upper steel sheet SU and the lower steel sheet SL are the 1470 MPa grade cold-rolled steel sheets having a sheet thickness of 1.6 mm.

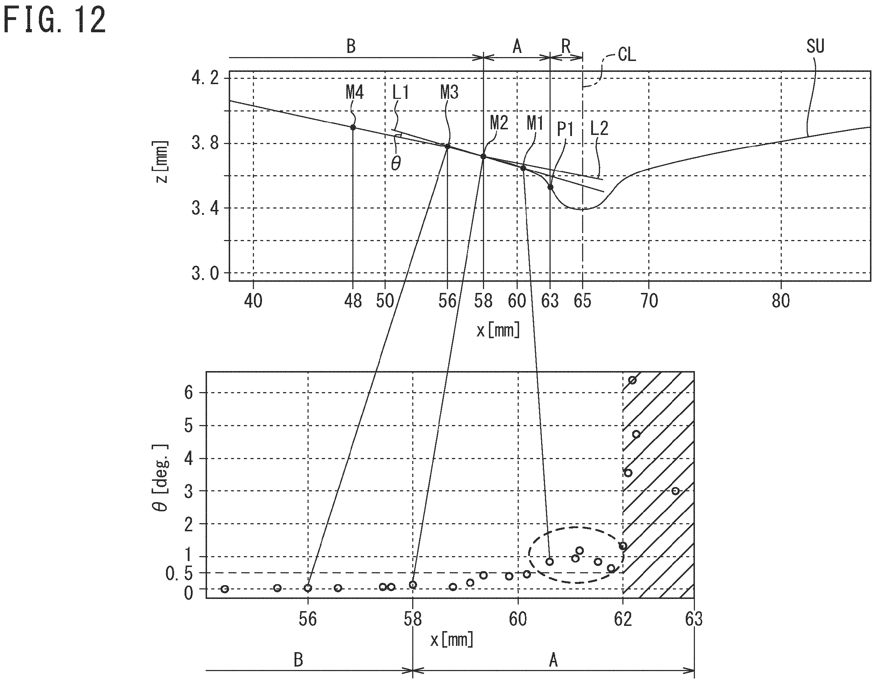

FIG. 12 illustrates the ground for setting the threshold value of the angle on the acute angle side formed between the first regression line and the second regression line to 0.5° when the resistance spot welding is applied to the test specimen having a 2 mm gap between the overlapped upper steel sheet and lower steel sheet. In FIG. 12, the vertical axis of the upper graph indicates the position in the up and down direction (z-direction) of the surface of the upper steel sheet SU, and the horizontal axis indicates the position in the longitudinal direction (x-direction) of the surface of the upper steel sheet SU. The vertical axis of the lower graph in FIG. 12 illustrates the angle θ on the acute angle side formed between the second regression line L2, which is calculated from the positions of the point M4 (point at the position 15 mm from the position P1 where the primary surface of the upper steel sheet SU is visually recognizable) and the point M3 (point at the position 7 mm from the position P1 where the primary surface of the upper steel sheet SU is visually recognizable) of the upper steel sheet SU, and the first regression line L1, which is calculated from the positions of the point M2 (point at the position 5 mm from the position P1 where the primary surface of the upper steel sheet SU is visually recognizable) on the primary surface of the electrode-vicinity region A and the position of the measurement point M1 of the upper steel sheet SU. The horizontal axis of the lower graph in FIG. 12 illustrates the position in the longitudinal direction (x-direction) of the measurement point M1.

From FIG. 12, when the measurement point M1 is located in the electrode-vicinity region A, a large number of point groups where the angle θ on the acute angle side formed between the second regression line L2 and the first regression line L1 is 0.5° or more can be observed, and it can be determined that the welding has had a disturbance. In FIG. 12, a shaded region in the lower graph is an electrode pressing region of the electrode-vicinity region A, and therefore data therein is ignored.

Therefore, the predetermined angle for the gap determination serving as the threshold value is set to 0.5° when the upper steel sheet SU and the lower steel sheet SL are the 1470 MPa grade cold-rolled steel sheets having a sheet thickness of 1.6 mm.

When the predetermined angle for the gap determination serving as the threshold value is 0.5°, strain due to the gap δ in the electrode-vicinity region A can be captured, and it can be determined that the welding has had a disturbance when the upper steel sheet SU and the lower steel sheet SL are the 1470 MPa grade cold-rolled steel sheets having a sheet thickness of 1.6 mm.

The predetermined angle for the gap determination is considered to change depending on the sheet thicknesses and the steel grades of the upper steel sheet SU and the lower steel sheet SL. When the sheet thicknesses and the steel grades of the upper steel sheet SU and the lower steel sheet SL change, it is preferable to set the predetermined angle for the gap determination serving as the threshold value described above by trying welding of the upper steel sheet SU and the lower steel sheet SL having the gap δ and welding of the upper steel sheet SU and the lower steel sheet SL having no gap δ.

Accordingly, the gap determination section 33 determines that the gap δ is present between the overlapped upper steel sheet SU and lower steel sheet SL when the angle θ on the acute angle side formed between the first regression line L1 and the second regression line L2 is 0.5° or more, and determines that no gap δ is present between the overlapped upper steel sheet SU and lower steel sheet SL when the angle θ on the acute angle side is smaller than 0.5°.

The determination result output section 34 outputs the determination result in the gap determination section 33 and sends the determination result to the control section 20. Specifically, the determination result output section 34 outputs the determination result in the gap determination section 33, i.e., whether the gap δ is present between the upper steel sheet SU and the lower steel sheet SL or whether no gap δ is present between the upper steel sheet SU and the lower steel sheet SL, and sends the determination result to the control section 20.

Then, the control section 20 selects welding conditions, such as the pressurizing force with the first electrode 12 and the second electrode 13, the welding current, the current application time, and the welding position, according to the determination result in the gap determination section, i.e., whether the gap δ is present. Then, the control section 20 controls the actuator 14, the robot 21, and the power source 22 such that the welding can be carried out under the welding conditions, and carries out the welding of the overlapped upper steel sheet SU and lower steel sheet SL.

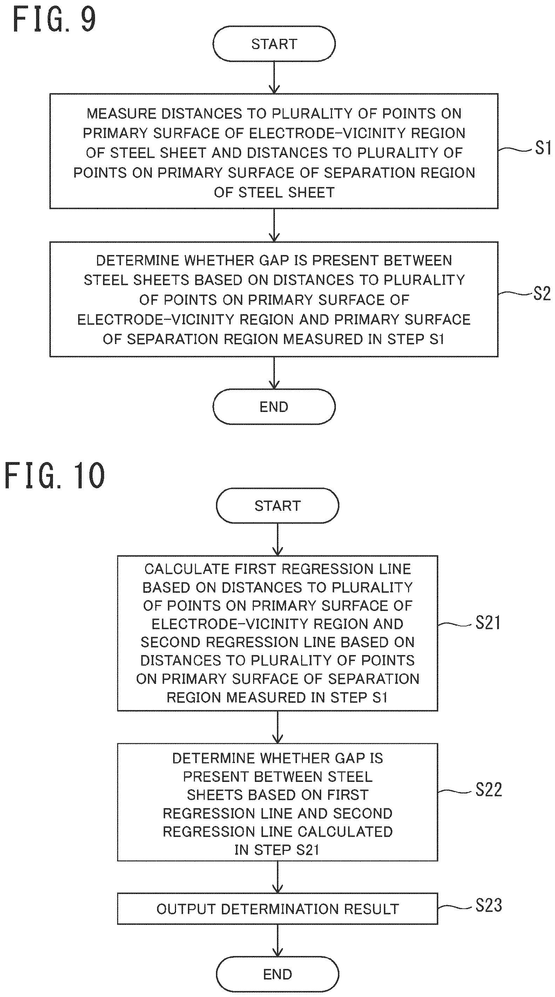

Next, the processing flow in the gap determination device representing the gap determination method according to one embodiment of the present invention is described with reference to FIGS. 9 and 10. FIG. 9 is a flowchart for explaining the processing flow in the gap determination device. FIG. 10 is a flowchart for explaining the processing flow of Step S2 (determination step) in the flowchart illustrated in FIG. 9.

First, in Step S1, the range finder 35 of the gap determination device 30 measures the distances from the range finder 35 to the plurality of points (two points M1, M2 in this embodiment) on the primary surface (rear surface) SLa of the electrode-vicinity region A of the lower steel sheet SL and the distances from the range finder 35 to the plurality of points (two points M3, M4 in this embodiment) on the primary surface (rear surface) SLb of the separation region B separated from the electrode-vicinity region A of the lower steel sheet SL in the state after the overlapped upper steel sheet SU and lower steel sheet SL are pressurized with the first electrode 12 and the second electrode 13 and before the welding current is applied between the first electrode 12 and the second electrode 13 (distance measurement step).

At this time, the range finder 35 receives a signal indicating that the overlapped upper steel sheet SU and lower steel sheet SL are pressurized with the first electrode 12 and the second electrode 13 from the control section 20, starts the measurement using this signal as a trigger, and sends the measured information to the determination device 31.

Herein, with respect to the electrode-vicinity region A, when the upper steel sheet SU and the lower steel sheet SL are the 1470 MPa grade cold-rolled steel sheets having a sheet thickness of 1.6 mm, the electrode-vicinity region A is formed in the range up to 5 mm from the position P1, where the primary surface of the lower steel sheet SL is visually recognizable, separated from the position CP of the center CL of the second electrode 13 corresponding to the radius R at the tip of the second electrode 13 as described above. However, the position of the boundary on the separation region B of the electrode-vicinity region A is not necessarily the position up to 5 mm from the position P1 where the primary surface of the lower steel sheet SL is visually recognizable, and is set as appropriate according to the shapes, the sheet thicknesses, and the steel grades of the upper steel sheet SU and the lower steel sheet SL.

When the upper steel sheet SU and the lower steel sheet SL are the 1470 MPa grade cold-rolled steel sheets having a sheet thickness of 1.6 mm, the separation region B is formed in a range up to 30 mm from the position beyond the range up to 5 mm from the position P1 where the primary surface, in which the electrode-vicinity region A of the lower steel sheet SL is formed, of the lower steel sheet SL is visually recognizable as described above. However, when the position of the boundary on the separation region B side of the electrode-vicinity region A is set as appropriate according to the shapes, the sheet thicknesses, and the steel grades of the upper steel sheet SU and the lower steel sheet SL, the separation region B is formed in the range up to the position set as appropriate according to the shapes, the sheet thicknesses, and the steel grades of the upper steel sheet SU and the lower steel sheet SL from the position beyond the range up to the boundary position of the electrode-vicinity region A set as appropriate from the position P1 where the primary surface of the lower steel sheet SL is visually recognizable.

Next, in Step S2, the determination device 31 of the gap determination device 30 determines whether the gap δ is present between the overlapped upper steel sheet SU and lower steel sheet SL based on the distances from the range finder 35 to the plurality of points M1, M2 on the primary surface (rear surface) SLa of the electrode-vicinity region A of the lower steel sheet SL and the distances from the range finder 35 to the plurality of points M3, M4 on the primary surface (rear surface) SLb of the separation region B of the lower steel sheet SL measured in Step S1 (distance measurement step) (determination step).

The determination step is described in detail with reference to FIG. 10.

First, in Step S21, the regression line calculation section 32 of the determination device 31 calculates the first regression line L1 regressing the slope of the primary surface SLa of the electrode-vicinity region A of the lower steel sheet SL based on the distances to the plurality of points M1, M2 on the primary surface (rear surface) SLa of the electrode-vicinity region A of the lower steel sheet SL measured in Step S1 (distance measurement step). The regression line calculation section 32 calculates the second regression line L2 regressing the slope of the primary surface SLb of the separation region B of the lower steel sheet SL based on the distances to the plurality of points M3, M4 on the primary surface SLb of the separation region B of the lower steel sheet SL measured with the range finder 35 (regression line calculation step).

Specifically, the regression line calculation section 32 acquires information on the distances to the plurality of points M1, M2 on the primary surface SLa of the electrode-vicinity region A of the lower steel sheet SL measured in Step S1 from the range finder 35 and calculates the positions of the plurality of points M1, M2 based on the acquired distances to the plurality of points M1, M2. Then, the regression line calculation section 32 calculates the first regression line L1 from the calculated positions of the plurality of points M1, M2.

The regression line calculation section 32 calculates the positions of the plurality of points M3, M4 based on the distances to the plurality of points M3, M4 on the primary surface SLb of the separation region B of the lower steel sheet SL measured with the range finder 35. Then, the regression line calculation section 32 calculates the second regression line L2 from the calculated positions of the plurality of points M3, M4.

Next, in Step S22, the gap determination section 33 of the determination device 31 determines whether the gap δ is present between the overlapped upper steel sheet SU and lower steel sheet SL based on the angle θ formed between the first regression line L1 and the second regression line L2 calculated in Step S21 (regression line calculation step) (gap determination step).

Specifically, when the angle θ on the acute angle side formed between the first regression line L1 and the second regression line L2 is equal to or larger than the predetermined angle, the gap determination section 33 determines that the gap δ is present between the overlapped upper steel sheet SU and lower steel sheet SL.

On the other hand, when the angle θ on the acute angle side formed between the first regression line L1 and the second regression line L2 is smaller than the predetermined angle, the gap determination section 33 determines that no gap δ is present between the overlapped upper steel sheet SU and lower steel sheet SL.

Herein, the predetermined angle for the gap determination is set to 0.5° for a reason similar to the reason above in the case of this embodiment, i.e., when the upper steel sheet SU and the lower steel sheet SL are the 1470 MPa grade cold-rolled steel sheets having a sheet thickness of 1.6 mm. Accordingly, the gap determination section 33 determines that the gap δ is present between the overlapped upper steel sheet SU and lower steel sheet SL when the angle θ on the acute angle side formed between the first regression line L1 and the second regression line L2 is 0.5° or more, and determines that no gap δ is present between the overlapped upper steel sheet SU and lower steel sheet SL when the angle θ on the acute angle side is smaller than 0.5°.

Next, in Step S23, the determination result output section 34 of the determination device 31 outputs the determination result in Step S22 (gap determination step) and sends the determination result to the control section 20. Specifically, the determination result output section 34 outputs the determination result in Step S22 (gap determination step), i.e., whether the gap δ is present between the upper steel sheet SU and the lower steel sheet SL or whether no gap δ is present between the upper steel sheet SU and the lower steel sheet SL, and sends the determination result to the control section 20.

This completes Step S2 (determination step).

Then, the control section 20 selects the welding conditions, such as the pressurizing force with the first electrode 12 and the second electrode 13, the welding current, the current application time, and the welding position, according to the determination result in the gap determination section (whether the gap δ is present). Then, the control section 20 controls the actuator 14, the robot 21, and the power source 22 such that the welding can be carried out under the welding conditions, and carries out the welding of the overlapped upper steel sheet SU and lower steel sheet SL.

Thus, according to the gap determination device 30 and the gap determination method according to this embodiment, the range finder 35 (distance measurement step: Step S1) measures the distances from the range finder 35 to the plurality of points M1, M2 on the primary surface (rear surface) SLa of the electrode-vicinity region A of the lower steel sheet SL and the distances from the range finder 35 to the plurality of points M3, M4 on the primary surface (rear surface) SLb of the separation region B separated from the electrode-vicinity region A of the lower steel sheet SL in the state after the overlapped upper steel sheet SU and lower steel sheet SL are pressurized with the first electrode 12 and the second electrode 13 and before the welding current is applied between the first electrode 12 and the second electrode 13. The determination device 31 (determination step: Step S2) determines whether the gap δ is present between the overlapped upper steel sheet SU and lower steel sheet SL based on the distances to the plurality of points M1, M2 on the primary surface (rear surface) SLa of the electrode-vicinity region A of the lower steel sheet SL and the distances to the plurality of points M3, M4 on the primary surface (rear surface) SLb of the separation region B of the lower steel sheet SL measured with the range finder 35 (distance measurement step: Step S1).

Then, the regression line calculation section 32 (regression line determination step: Step S21) of the determination device 31 (determination step: Step S2) calculates the first regression line L1 regressing the slope of the primary surface SLa of the electrode-vicinity region A of the lower steel sheet SL based on the distances to the plurality of points M1, M2 on the primary surface (rear surface) SLa of the electrode-vicinity region A of the lower steel sheet SL measured with the range finder 35 (distance measurement step: Step S1). The regression line calculation section 32 (regression line determination step: Step S21) calculates the second regression line L2 regressing the slope of the primary surface (rear surface) SLb of the separation region B of the lower steel sheet SL based on the distances to the plurality of points M3, M4 on the primary surface (rear surface) SLb of the separation region B of the lower steel sheet SL measured with the range finder 35 (distance measurement step: Step S1). The gap determination section 33 (gap determination step: Step S22) of the determination device 31 (determination step: Step S2) determines whether the gap δ is present between the overlapped upper steel sheet SU and lower steel sheet SL based on the angle θ formed between the first regression line L1 and the second regression line L2 calculated with the regression line calculation section 32 (regression line determination step: Step S21).

Thus, when the overlapped upper steel sheet SU and lower steel sheet SL are welded, the presence of the gap δ between the overlapped upper steel sheet SU and lower steel sheet SL among disturbances can be determined by directly measuring the shapes of the overlapped upper steel sheet SU and lower steel sheet SL in the state after the overlapped upper steel sheet SU and lower steel sheet SL are pressurized with the first electrode 12 and the second electrode 13 and before the welding current is applied between the first electrode 12 and the second electrode 13.

This makes it possible to avoid, the risk of causing strain in the welded part w by distortion of the steel sheets in the vicinity of the electrodes after the overlapped upper steel sheet SU and lower steel sheet SL are welded due to the presence of the gap δ between the upper steel sheet SU and the lower steel sheet SL when the overlapped upper steel sheet SU and lower steel sheet SL are welded.

Then, the range finder 35 (distance measurement step : Step S1) measures the distances from the range finder 35 to the plurality of points M1, M2 on the primary surface (rear surface) SLa of the electrode-vicinity region A of the lower steel sheet SL of the overlapped upper steel sheet SU and lower steel sheet SL and the distances from the range finder 35 to the plurality of points M3, M4 on the primary surface (rear surface) SLb of the separation region B separated from the electrode-vicinity region A of the lower steel sheet SL. Therefore, the shapes of the overlapped upper steel sheet SU and lower steel sheet SL can be directly measured. Therefore, the strain measurement value measured with the strain gauges attached to the electrode is not used as with the prior art, and, when the gap δ is determined, the determination of the gap δ is not affected by the wear of the electrode or the surface roughness state of the steel sheet, for example.

According to the gap determination device 30 and the gap determination method of this embodiment, the gap determination section 33 (gap determination step: Step S22) determines that the gap δ is present between the overlapped upper steel sheet SU and lower steel sheet SL when the angle θ on the acute angle side formed between the first regression line L1 and the second regression line L2 is equal to or larger than the predetermined angle. This makes it possible to determine whether the gap δ is present between the overlapped upper steel sheet SU and lower steel sheet SL in a simple manner.

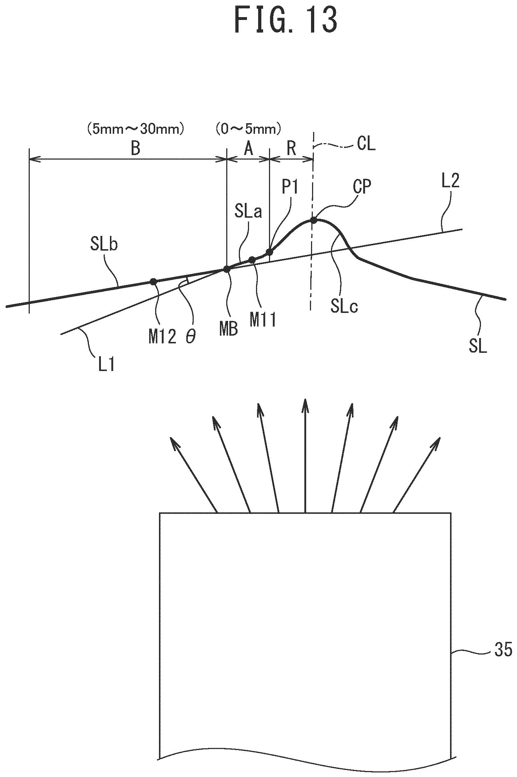

Next, another example of the principle of the gap determination with the gap determination device 30 is described with reference to FIG. 13.

As illustrated in FIG. 13, the plurality of points on the primary surface (rear surface) SLa of the electrode-vicinity region A of the lower steel sheet SL to be measured with the range finder 35 (distance measurement step : Step S1) is formed by at least a first predetermined point M11 on the primary surface (rear surface) SLa of the electrode-vicinity region A of the lower steel sheet SL and a boundary point MB serving as the boundary between the primary surface (rear surface) SLa of the electrode-vicinity region A of the lower steel sheet SL and the primary surface (rear surface) SLb of the separation region B of the lower steel sheet SL. The plurality of points on the primary surface (rear surface) SLb of the separation region B of the lower steel sheet SL may be formed by at least a second predetermined point M12 on the primary surface (rear surface) SLb of the separation region B of the lower steel sheet SL and the above-described boundary point MB.

Then, in this case, the range finder 35 (distance measurement step: Step S1) measures the distance to at least the first predetermined point M11, the distance to the boundary point MB, and the distance to the second predetermined point M12 from the range finder 35.

For example, a point 2 mm separated from the position P1 where the primary surface of the lower steel sheet SL is visually recognizable is selected as the first predetermined point M11, and a point 5 mm separated from the position P1 where the primary surface of the lower steel sheet SL is visually recognizable is selected as the boundary point MB. Then, a point 10 mm separated from the position P1 where the primary surface of the lower steel sheet SL is visually recognizable is selected as the second predetermined point M12. In this case, the range finder 35 measures the distances from the range finder 35 to at least the three points.

The regression line calculation section 32 (regression line calculation step: Step S21) calculates the first regression line L1 based on at least the distance to the first predetermined point M11 and the distance to the boundary point MB measured with the range finder 35 (distance measurement step: Step S1). The regression line calculation section 32 (regression line calculation step: Step S21) calculates the second regression line L2 based on at least the distance to the second predetermined point M12 and the distance to the boundary point MB measured with the range finder 35 (distance measurement step: Step S1).

Thus, the number of the measurement target points with the range finder 35 can be reduced, and the processing time in the regression line calculation section 32 (regression line calculation step: Step S21) and the processing time in the gap determination section 33 (gap determination step: Step S22) can be shortened. This makes it possible to select the welding conditions according to the presence or absence of the gap δ in the control section 20 in short time.

Although the embodiment of the present invention is described above, the present invention is not limited thereto and can be variously altered or modified.

For example, the number of the steel sheets to be overlapped may be not only the two sheets of the upper steel sheet SU and the lower steel sheet SL but three or more steel sheets.

Although the range finder 35 measures the distances from the range finder 35 to the plurality of points on the primary surface (rear surface) SLa of the electrode-vicinity region A and to the plurality of points on the primary surface (rear surface) SLa of the separation region B of the lower steel sheet SL, the range finder 35 may measure the distances from the range finder 35 to the plurality of points on the primary surface (front surface) SUa (see FIG. 7) of the electrode-vicinity region A and to the plurality of points on the primary surface (front surface) SUb (see FIG. 7) of the separation region B of the upper steel sheet SU.

When the number of the steel sheets to be overlapped is three or more, the range finder 35 may measure the distances from the range finder 35 to the plurality of points on the primary surface of the electrode-vicinity region A of the uppermost or lowermost steel sheet among the plurality of overlapped steel sheets and the distances from the range finder 35 to the plurality of points on the primary surface of the separation region B separated from the electrode-vicinity region A of the uppermost or lowermost steel sheet.

The number of the plurality of points on the primary surface of the electrode-vicinity region A of the steel sheet and the plurality of points on the primary surface of the separation region B of the steel sheet to be measured with the range finder 35 are not limited to the two points (M1, M2; M3, M4) and may be two or more points.

As described above, in the electrode-vicinity region A, the position of the boundary on the separation region B side is set as appropriate according to the shapes, the sheet thicknesses, and the steel grades of the upper steel sheet SU and the lower steel sheet SL, and the electrode-vicinity region A is not limited to one formed in the range up to 5 mm from of the position P1, where the primary surface of the lower steel sheet SL is visually recognizable, separated from the position of the center CL of the second electrode 13 corresponding to the radius R at the tip of the second electrode 13 as described above.

The separation region B is not limited to one formed in the range up to 30 mm from the position beyond the range up to 5 mm from the position P1 where the primary surface, in which the electrode-vicinity region A of the lower steel sheet SL is formed, of the lower steel sheet SL is visually recognizable as described above. When the position of the boundary on the separation region B side of the electrode-vicinity region A is set as appropriate according to the shapes, the sheet thicknesses, and the steel grades of the upper steel sheet SU and the lower steel sheet SL, the separation region B is formed in the range up to the position set as appropriate according to the shapes, the sheet thicknesses, and the steel grades of the upper steel sheet SU and the lower steel sheet SL from the position beyond the range up to the boundary position of the electrode-vicinity region A set as appropriate from the position P1 where the primary surface of the lower steel sheet SL is visually recognizable.

The predetermined angle serving as the standard for the gap determination performed by the gap determination section 33 is not limited to 0.5° as described above.

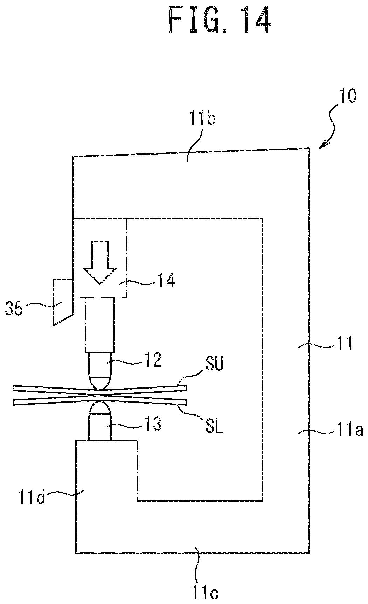

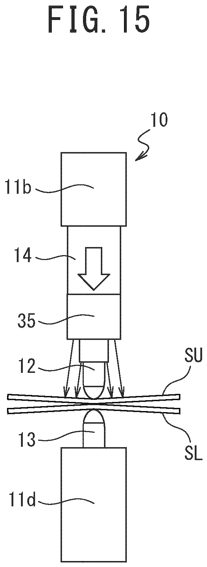

The range finder 35 measures the distances to the plurality of points on the primary surface (front surface) SUa (see FIG. 7) of the electrode-vicinity region A and the distances to the plurality of points on the primary surface (front surface) SUb (see FIG. 7) of the separation region B of the upper steel sheet SU from the range finder 35. In this case, the range finder 35 can be attached to the front surface of the actuator 14 attached to the upper part 11b of the welding gun body 11 as illustrated in FIGS. 14 and 15.

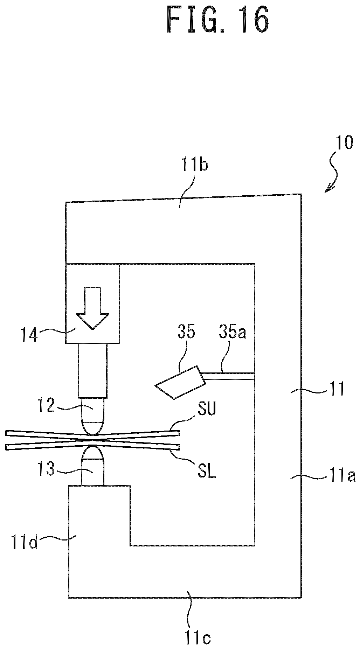

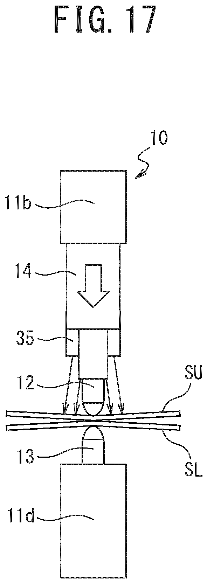

The range finder 35 measures the distances to the plurality of points on the primary surface (front surface) SUa of the electrode-vicinity region A and the distances to the plurality of points on the primary surface (front surface) SUb of the separation region B of the upper steel sheet SU from the range finder 35. In this case, the range finder 35 may be attached to a support part 35a provided in the up-and-down elongation part 11a of the welding gun body 11 as illustrated in FIGS. 16 and 17. In this case, the range finder 35 is attached to the stationary welding gun body 11 side instead of the movable actuator 14. Therefore, the distance to the distance measurement target point can be measured without being affected by the vibrations immediately after the pressurization with the first electrode 12 and the second electrode 13.

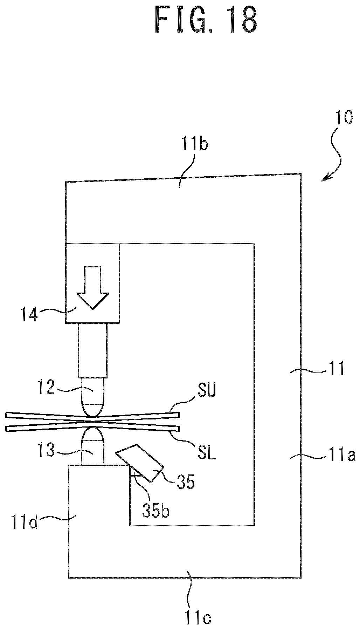

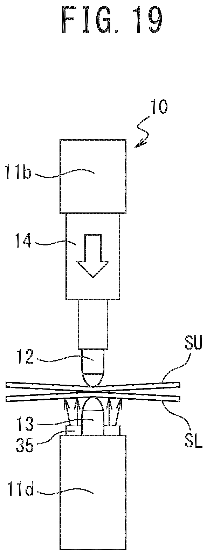

The range finder 35 measures the distances to the plurality of points on the primary surface (rear surface) SLa of the electrode-vicinity region A and the distances to the plurality of points on the primary surface (rear surface) SLb of the separation region B of the lower steel sheet SL from the range finder 35. In this case, the range finder 35 may be attached to a support part 35b provided on the rear surface (right side in FIG. 18) of the raised part 11d of the welding gun body 11 as illustrated in FIGS. 18 and 19.

### Reference Signs List

1 resistance spot welding device
10 welding gun
11 welding gun body
11a up-and-down elongation part
11b upper part
11c lower part
11d raised part
12 first electrode
13 second electrode
14 actuator
20 control section
21 robot
22 power source
30 gap determination device
31 determination device
32 regression line calculation section
33 gap determination section
34 determination result output section
35 range finder
35a, 35b support part
A electrode-vicinity region
B separation region
L1 first regression line
L2 second regression line
SU upper steel sheet (steel sheet)
SUa primary surface of electrode-vicinity region of upper steel sheet
SUb primary surface of separation region of upper steel sheet
SL lower steel sheet (steel sheet)
SLa primary surface of electrode-vicinity region of lower steel sheet
SLb primary surface of separation region of lower steel sheet
δ gap

## Claims

1. A method for determining a gap between steel sheets in resistance spot welding,
the resistance spot welding including pressurizing a plurality of overlapped steel sheets sandwiched between a first electrode and a second electrode arranged opposite to each other and, under the pressurization, applying welding current between the first electrode and the second electrode for joining,
the method comprising:
a distance measurement step of measuring, with a range finder, distances from the range finder to a plurality of points on a primary surface of an electrode-vicinity region of an uppermost or lowermost steel sheet of the plurality of overlapped steel sheets and distances from the range finder to a plurality of points on a primary surface of a separation region separated from the electrode-vicinity region of the uppermost or lowermost steel sheet in a state after the plurality of overlapped steel sheets is pressurized with the first electrode and the second electrode and before the welding current is applied between the first electrode and the second electrode; and
a determination step of determining whether a gap is present between the plurality of overlapped steel sheets based on the distances to the plurality of points on the primary surface of the electrode-vicinity region of the steel sheet and the distances to the plurality of points on the primary surface of the separation region of the steel sheet measured in the distance measurement step, wherein
the determination step includes: a regression line calculation step of calculating a first regression line regressing a slope of the primary surface of the electrode-vicinity region of the steel sheet based on the distances to the plurality of points on the primary surface of the electrode-vicinity region of the steel sheet measured in the distance measurement step and calculating a second regression line regressing a slope of the primary surface of the separation region of the steel sheet based on the distances to the plurality of points on the primary surface of the separation region of the steel sheet measured in the distance measurement step; and a gap determination step of determining whether a gap is present between the plurality of overlapped steel sheets based on an angle formed between the first regression line and the second regression line calculated in the regression line calculation step.

2. The method for determining a gap between steel sheets in resistance spot welding according to claim 1, wherein
the plurality of points on the primary surface of the electrode-vicinity region of the steel sheet to be measured in the distance measurement step is formed by at least a first predetermined point on the primary surface of the electrode-vicinity region of the steel sheet and a boundary point serving as a boundary between the primary surface of the electrode-vicinity region of the steel sheet and the primary surface of the separation region of the steel sheet and the plurality of points on the primary surface of the separation region of the steel sheet is formed by at least a second predetermined point on the primary surface of the separation region of the steel sheet and the boundary point,
the distance measurement step includes measuring, with the range finder, a distance to at least the first predetermined point, a distance to the boundary point, and a distance to the second predetermined point from the range finder, and
the regression line calculation step in the determination step includes calculating the first regression line based on at least the distance to the first predetermined point and the distance to the boundary point measured in the distance measurement step and calculating the second regression line based on at least the distance to the second predetermined point and the distance to the boundary point measured in the distance measurement step.

3. The method for determining a gap between steel sheets in resistance spot welding according to claim 1, wherein the electrode-vicinity region of the steel sheet is formed in a range up to 5 mm from a position, where the primary surface of the steel sheet is visually recognizable, separated from a center position of the first electrode or the second electrode corresponding to a radius at a tip of the first electrode or the second electrode and the separation region of the steel sheet is formed in a range up to 30 mm from a position beyond the range up to 5 mm from the position where the primary surface, in which the electrode-vicinity region of the steel sheet is formed, of the steel sheet is visually recognizable.

4. The method for determining a gap between steel sheets in resistance spot welding according to any one of claims 1 to 3, wherein the gap determination step in the determination step includes determining that a gap is present between the plurality of overlapped steel sheets when an angle on an acute angle side formed between the first regression line and the second regression line is equal to or larger than a predetermined angle.

5. The method for determining a gap between steel sheets in resistance spot welding according to claim 4, wherein the predetermined angle is 0.5°.

6. A device for determining a gap between steel sheets in resistance spot welding,
the resistance spot welding including pressurizing a plurality of overlapped steel sheets sandwiched between a first electrode and a second electrode arranged opposite to each other and, under the pressurization, applying welding current between the first electrode and the second electrode for joining,
the device comprising:
a range finder configured to measure distances to a plurality of points on a primary surface of an electrode-vicinity region of an uppermost or lowermost steel sheet of the plurality of overlapped steel sheets and distances to a plurality of points on a primary surface of a separation region separated from the electrode-vicinity region of the uppermost or lowermost steel sheet in a state after the plurality of overlapped steel sheets is pressurized with the first electrode and the second electrode and before the welding current is applied between the first electrode and the second electrode; and
a determination device configured to determine whether a gap is present between the plurality of overlapped steel sheets based on the distances to the plurality of points on the primary surface of the electrode-vicinity region of the steel sheet and the distances to the plurality of points on the primary surface of the separation region of the steel sheet measured with the range finder, wherein
the determination devices includes: a regression line calculation section configured to calculate a first regression line regressing a slope of the primary surface of the electrode-vicinity region of the steel sheet based on the distances to the plurality of points on the primary surface of the electrode-vicinity region of the steel sheet measured with the range finder and calculate a second regression line regressing a slope of the primary surface of the separation region of the steel sheet based on the distances to the plurality of points on the primary surface of the separation region of the steel sheet measured with the range finder; and a gap determination section configured to determine whether a gap is present between the plurality of overlapped steel sheets based on an angle formed between the first regression line and the second regression line calculated with the regression line calculation section.

7. The device for determining a gap between steel sheets in resistance spot welding according to claim 6, wherein
the plurality of points on the primary surface of the electrode-vicinity region of the steel sheet to be measured with the range finder is formed by at least a first predetermined point on the primary surface of the electrode-vicinity region of the steel sheet and a boundary point serving as a boundary between the primary surface of the electrode-vicinity region of the steel sheet and the primary surface of the separation region of the steel sheet and the plurality of points on the primary surface of the separation region of the steel sheet is formed by at least a second predetermined point on the primary surface of the separation region of the steel sheet and the boundary point,
the range finder is configured to measure a distance to at least the first predetermined point, a distance to the boundary point, and a distance to the second predetermined point from the range finder, and
the regression line calculation section in the determination device is configured to calculate the first regression line based on at least the distance to the first predetermined point and the distance to the boundary point measured with the range finder and calculates the second regression line based on at least the distance to the second predetermined point and the distance to the boundary point measured with the range finder.

8. The device for determining a gap between steel sheets in resistance spot welding according to claim 6, wherein the electrode-vicinity region of the steel sheet is formed in a range up to 5 mm from a position, where the primary surface of the steel sheet is visually recognizable, separated from a center position of the first electrode or the second electrode corresponding to a radius at a tip of the first electrode or the second electrode and the separation region of the steel sheet is formed in a range up to 30 mm from a position beyond the range up to 5 mm from the position where the primary surface, in which the electrode-vicinity region of the steel sheet is formed, of the steel sheet is visually recognizable.

9. The device for determining a gap between steel sheets in resistance spot welding according to any one of claims 6 to 8, wherein the gap determination section in the determination device is configured to determine that a gap is present between the plurality of overlapped steel sheets when an angle on an acute angle side formed between the first regression line and the second regression line is equal to or larger than a predetermined angle.

10. The device for determining a gap between steel sheets in resistance spot welding according to claim 9, wherein the predetermined angle is 0.5°.
